## Europäisches Patentamt
## European Patent Office
## Office européen des brevets

(19)

(11) Veröffentlichungsnummer: **0 120 475**
**B1**

(12)

# EUROPÄISCHE PATENTSCHRIFT

(45) Veröffentlichungstag der Patentschrift:
18.03.87

(51) Int. Cl.⁴: **H 02 G 15/18**

(21) Anmeldenummer: 84103183.4

(22) Anmeldetag: 22.03.84

(54) Kabelmuffeneinlage für eine schrumpfbare Kabelmuffe.

(30) Priorität: 25.03.83 DE 3311011

(43) Veröffentlichungstag der Anmeldung:
03.10.84 Patentblatt 84/40

(45) Bekanntmachung des Hinweises auf die Patenterteilung:
18.03.87 Patentblatt 87/12

(84) Benannte Vertragsstaaten:
BE DE FR GB IT NL

(56) Entgegenhaltungen:
EP-A-0 034 042
EP-A-0 041 388
DE-A-2 807 154
DE-A-3 026 099

(73) Patentinhaber: **Siemens Aktiengesellschaft Berlin und München, Wittelsbacherplatz 2, D-8000 München 2 (DE)**

(72) Erfinder: **Bachel, Ernst, Erlenweg 8, D-8065 Geltendorf (DE)**
Erfinder: **Giebel, Wolfgang, Dipl.- Ing., Mathilden-Strasse 31a, D-8033 Planegg (DE)**
Erfinder: **Kunze, Dieter, Dipl.- Ing., Rosenstrasse 10, D-8027 Neuried (DE)**

## Beschreibung

Die Erfindung betrifft eine wickelbare mittels Verbundschichten, die aus mehreren fest aneinander haftenden einzelnen Schichten bestehen, von denen mindestens eine Schicht wasserdampfundurchlässig ist, hergestellte Kabelmuffeneinlage für schrumpfbare Kabelmuffen, die einen glatten Mittelbereich und an die Durchmesser der gespleißten Kabel anpaßbare Endbereiche aufweist.

Durch die deutsche Gebrauchsmuster schrift DE-U- 8018 519 ist bereits eine Kabelmuffeneinlage bekannt, welche um einen Kabelspleiß mindestens einschichtig zu einer Rolle gewickelt werden kann. Als Umhüllung dient eine aufschrumpfbare wärmerückstellfähige Kabelmuffe. Diese Kabelmuffeneinlage besteht aus einem inneren wickelbaren Teil und einem äußeren wickelbaren Teil in Form einer Folie, der den inneren Teil umgibt, wobei der äußere Teil länger ist als der innere Teil. Außerdem kann der äußere, als Folie ausgebildete wickelbare Teil zumindest an den über den inneren Teil hinausragenden Enden auch längsgewellt sein. Als innerer Teil wird eine Pappe verwendet, die bei Wärmeeinwirkung unter Umständen unerwünschten Wasserdampf abgibt. Weiterhin muß die Pappe entsprechend dickwandig ausgebildet sein, um den mechanischen wie auch wärmetechnischen Erfordernissen zu genügen. Da die Randbereiche der inneren Einlage durch Einschnitte als Fiederung ausgebildet sind, ergeben sich gerade in diesen Bereichen gewisse Probleme.

Aus der europäischen Patentanmeldung EP-A- 41388 ist eine Kabelmuffe der eingangs genannten Art bekannt. Sie besitzt eine waserundurchlässige Schicht, die auch in den anpaßbaren Randbereichen einen kontinuierlich durchgehenden Schutz gegen eindringende Feuchtigkeit bietet. Dabei ist der mechanisch tragende Teil dieser Kabelmuffeneinlage aus einem Verbundmaterial, das in seiner Stärke und Festigkeit den Erfordernissen genügt. Da die Endbereiche anpaßbar sein müssen, sind diese durch besondere Maßnahmen flexibel gestaltet. Dies erfolgt durch keilförmige, in Achsrichtung geführte Einschnitte, so daß durch die verbleibenden Spitzen beim Zusammendrücken der gewickelten Kabelmuffeneinlage eine konusförmige Anpassung in den Endbereichen ermöglicht wird. Die Einschnitte haben jedoch normalerweise zur Folge, daß der als Beschichtung aufgebrachte Permeationsschutz ebenfalls eingeschnitten und damit zerstört ist. Um dies zu verhindern, ist die genannte Kabelmuffeneinlage nach dem Einbringen der Einschnitte mit einer permeationsdichten Folie versehen, die diese Einschnitte wieder permeationsdicht überbrückt. Beim Anpassen der Endbereiche durch Zusammendrücken der Spitzen ergibt sich durch Faltungen der die Einschnitte überbrückenden Folie in den Endbereichen wieder ein durchgehender Permeationsschutz, wobei diese Endbereiche durch die Einschnitte und durch das Fehlen des ausgeschnittenen mechanisch festen Materials mechanisch geschwächt sind. Zusätzlich werden für erhöhten Wärmeschutz besondere, geschäumte Schutzschichten aufgebracht. Somit sind in den Endbereichen für eine permeationsdichte Anpassung und für erhöhten Wärmeschutz besondere, zusätzliche Maßnahmen erforderlich, besonders auch deshalb, weil durch die Einschnitte in den Endbereichen die mechanische Festigkeit geschwächt ist.

Die Aufgabe der Erfindung besteht nun darin, eine Kabelmuffeneinlage zu schaffen, die in allen Bereichen, insbesondere den anpaßbaren Randbereichen eine verbesserte Formstabilität bei erhöhtem Wärmeschutz gewährt.

Die gestellte Aufgabe wird gemäß der Erfindung mit einer wickelbaren Kabelmuffeneinlage der eingangs geschilderten Art dadurch gelöst, daß die Kabelmuffeneinlage aus einer über ihre gesamte Länge längsgewellten Verbundschicht und einen auf die Außenseite dieser Schicht aufgebrachten, nur den zwischen den beiden an die Durchmesser der gespleißten Kabel anpaßbaren Endbereiche der Kabelmuffeneinlage liegenden Mittelbereich der längsgewellten Verbundschicht abdeckenden, ebenen Verbundschicht zusammengesetzt ist, daß die längsgewellte Verbundschicht aus drei fest aneinander haftenden Schichten gebildet ist, wobei die Mittelschicht aus wasserdampfundurchlässigem Material, die innen liegende Schicht aus wärmefestem, elektrisch isolierendem Material und die außen liegende Schicht aus einem verschmelz- bzw. verschweißbarem Material besteht, daß die ebene Verbundschicht aus mindestens zwei Schichten besteht, wobei die zur längsgewellten Verbundschicht weisende Schicht aus einem mit der außen liegenden Schicht der längsgewellten Verbundschicht verschmelz- bzw. verschweißbarem Material und die nach außen weisende Schicht aus wärmenfestem Material besteht und daß die längsgewellte Verbundschicht und die ebene Verbundschicht entlang ihrer durch die Wellung bedingten gemeinsamen Berührungslinien durch Verschmelzung bzw. Verschweißung des Materials ihrer sich berührenden Grenzschichten fest miteinander verbunden sind.

Vorteile gegenüber dem Stand der Technik ergeben sich bei der Kabelmuffeneinlage gemäß der Erfindung darin, daß bei äußerst guter Anpassungsfähigkeit in den Randbereichen eine hohe mechanische Festigkeit durch den kontinuierlichen geschlossenen und durch Wellung stabilisierten Aufbau gegeben ist. Im Mittelbereich ist die Festigkeit bzw. Steifigkeit außerdem durch das glatte, fest aufgebrachte Mittelteil erhöht, da die Längswellung des gewellten Teils durch den glatten Teil fixiert ist. Die dabei entstehenden längsverlaufenden Hohlräume erhöhen den Wärmeschutz ohne zusätzlichen Materialaufwand.

Anhand von fünf Figuren wird die Erfindung nun näher erläutert:

Figur 1 zeigt die über einem Kabelspleiß montierte Kabelmuffeneinlage,

Figur 2 verdeutlicht den Aufbau der einzelnen Schichten, aus denen die Kabelmuffeneinlage besteht,

Figur 3 zeigt eine erweiterte Form der Schichtenanordnung,

Figur 4 erklärt den Gesamtaufbau der noch nicht montierten Kabelmuffeneinlage,

Figur 5 gibt den Aufbau eines Beispiels für besondere wärmefeste Ausführung wieder.

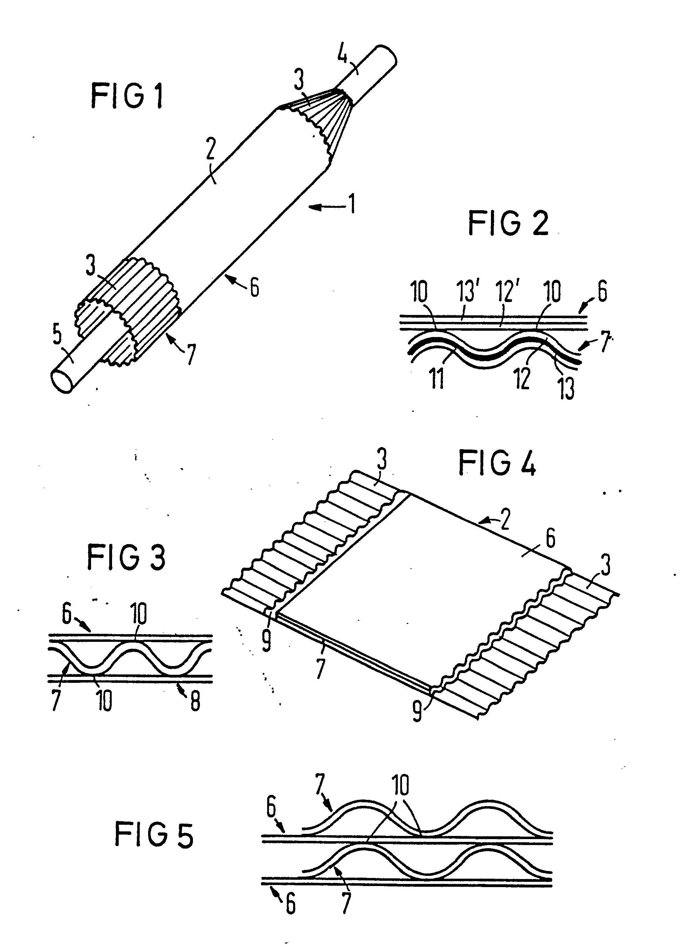

Gemäß Figur 1 ist die Kabelmuffeneinlage 1 gemäß der Erfindung über einem Kabelspleiß von zwei Kabeln 4 und 5 aufgebracht. In diesem Beispiel ist der Mittelbereich 2 nach außen hin glatt ausgebildet und auf der darunter liegenden längsgewellten Verbundschicht 7 fest haftend angeordnet. Beim Umwickeln wird somit die gesamte Kabelmuffeneinlage 1 in einem einzigen Wickelvorgang aufgebracht. Dabei stehen beiderseits vom glatten Mittelbereich 2 die gewellten Endbereiche 3 der längsgewellten Verbundschicht 7 über. Diese Endbereiche 3 können in einfacher Weise aufgrund ihrer Längswellung kegelförmig bis auf die Kabelmäntel zusammengedrückt werden, so daß sich eine konische Anpassung vom Durchmesser des Mittelbereiches 2 bis zu den Durchmessern der Kabel ergibt.

Die gewellten Endbereiche 3 der längsgewellten Verbundschicht 7 können als selbständige bzw. separate Teile ausgebildet sein, welche dann als Ansätze beiderseits des glatten Mittelbereiches 2 feuchtigkeitsdicht, z.B. durch Klebung oder Schweißung, angesetzt werden. Die weitere Funktion bzw. Montage ist völlig identisch. Vorteilhaft ist, wenn die Klebe- bzw. Schweißbereiche dieser Ansätze in glatter Form angesetzt werden, wobei umlaufende Falzungen oder Knicklinien das konische Zusammendrücken dieser gewellten Endbereiche erleichtern.

In Figur 2 wird der Aufbau der Kabelmuffeneinlage gezeigt. Über der längsgewellten Verbundschicht 7, die aus drei fest aneinander haftenden Einzelschichten 11, 12 und 13 besteht ist im Mittelbereich 2 eine ebene Verbundschicht 6 aus mindestens zwei Schichten 12' und 13' angeordnet. Diese beiden Verbundschichten 6 und 7 sind entlang ihrer gemeinsamen Berührungslinien 10 fest durch Materialverschmelzung bzw. Materialverschweißung miteinander verbunden. Auf diese Weise entstehen zwischen Verbundschichten 6 und 7 längs verlaufende Hohlräume, die einen sehr guten zusätzlichen Wärmeschutz ergeben. Die längsgewellte Verbundschicht 7 weist eine Innenschicht 13 aus besonders wärmefestem Material, zum Beispiel aus Polyterephthalat (Hostaphan) auf, durch welche die außen zum Schrumpfen aufgebrachte Wärme abgehalten wird. Dieses Material ist auch elektrisch isolierend, so daß ein sicherer elektrischer Isolationsschutz zum Kabelspleiß gegeben ist. Hierüber ist fest haftend eine wasserdampfundurchlässige Schicht 11, zum Beispiel eine Aluminiumfolie, aufgebracht, welche im gesamten Bereich, auch im Anpassungsbereich an den Seiten, einen sicheren Schutz gegen Wasserdampf gewährleistet. Es sind an den Endbereichen keine Einschnitte nötig, durch welche die Kontinuität der Dampfsperre unterbrochen würde; denn die Verbundschicht 7 wird ohne Einschnitte infolge ihrer Wellung konisch zusammengepreßt. Als dritte Schicht 12 ist nach außen hin noch eine verschmelz- oder verschweißbare Schicht 12 aus Kunststoff (z.B. Polyethylen) aufgebracht. Diese Schicht 12 ist im Mittelbereich der Kabelmuffeneinlage 1 mit einer nach innen gerichteten Schicht 12', die aus dem gleichen verschweißbaren Material besteht, verschmolzen bzw. verschweißt, so daß entlang der gemeinsamen Berührungslinien 10 mit der darüber angeordneten glatten Verbundschicht 6 eine feste Verbindung hergestellt und gewährleistet ist. Auf diese Schicht 12' ist nach außen weisend eine weitere wärmefeste Schicht 13', vorzugsweise wiederum aus Polyterephthalet aufgebracht. Gegebenenfalls ist zwischen den beiden Schichten 12' und 13' dieser Verbundschicht 6 noch eine wasserdampfundurchlässige Schicht aus einer Aluminiumfolie angeordnet, das heißt, es kann für den glatten wie für den längsgewellten Teil die gleiche Verbundschicht verwendet werden. Anstatt einer Aluminiumfolie können auch Folien aus anderen, jedoch ausreichend wasserdampfundurchlässigen Materialien Verwendung finden.

Die Figur 3 zeigt einen erweiterten Aufbau der Kabelmuffeneinlage 1, bei der der gewellte Teil im Mittelbereich beiderseits von jeweils einer glatten Verbundschicht 6 bzw. 8 nach der Art eines "Wellpappenaufbaus" bedeckt wird. Dieser Aufbau erhöht den Wärmeschutz und die mechanische Festigkeit der Kabelmuffeneinlage. Die Endbereiche bestehen wiederum nur aus einer gewellten Verbundschicht, so daß die Anpassung ohne Einschnitte erfolgen kann. Die einzelnen Verbundschichten 6, 7 und 8 haben den bereits beschriebenen Aufbau, doch kann die Verbundschicht 8, die auf der Innenseite der Kabeleinlage angeordnet ist, auch aus einer einzigen, zum Beispiel selbsthaftenden Folie bestehen. Diese Folie sollte dann besonders weich und flexibel sein, so daß sie auch in den Endbereichen belassen werden kann. Eine derart beschaffene Folie schmiegt sich beim konischen Zusammenpressen der Endbereiche ausgleichend an, so daß auch hier auf Einschnitte oder eine Art Fiederung verzichtet werden kann. Die Abedckung ist somit auch in diesen Bereichen ohne Unterbrechung.

In der Figur 4 wird die Kabelmuffeneinlage 1 im offenen Zustand gezeigt. Im Mittelbereich wird die längsgewellte Verbundschicht 7 von der glatten Verbundschicht überdeckt wird. Jeweils am seitlichen Abschluß der glatten Verbundschicht 2 ist in der längsgewellten Verbundschicht 7 eine Falzung 9 bzw. eine Knicklinie eingebracht, so daß die Endbereiche 3 der gewellten Verbundschicht 7 entlang dieser definierten Linie konisch nach innen abgebogen werden können.

Figur 5 zeigt abschließend eine besonders wärmefeste und stabile Ausführungsform der Kabelmuffeneinlage. Es werden nämlich bei diesem Ausführungsbeispiel zwei der bereits beschriebenen "Verbundschichten-Systeme" 6-7 übereinander angeordnet. Diese Verbundeinheiten können lose übereinander aufgewickelt werden. Es ist jedoch auch möglich, solche Verbundeinheiten fest miteinander zu verbinden, so daß sie als ein einziges Teil aufwickelbar sind. Hier ist dann besonders vorteilhaft, wenn die Wellungen der gewellten Verbundschichten 7 völlig gleichlaufend übereinander zu liegen kommen. Auf diese Weise wird gewährleistet, daß über dem gesamten Bereich hinweg eine gleichmäßige Luftschicht enthalten ist. Die beiden Verbundschichten sind wiederum entlang ihrer gemeinsamen Berührungslinien 10 miteinander verschweißt bzw. verschmolzen, so daß sich eine Doppelschicht ergibt. Infolge der vielfachen Lufteinschlüsse mit den jeweiligen Einlagen aus wärmefestem Material entsprechend der mehrfach übereinander liegenden Verbundschichten wird ein besonders hoher Wärmeschutz erreicht.

**Bezugszeichenliste**

1 Kabelmuffeneinlage
2 Mittelbereich
3 Endbereich
4 Kabel
5 Kabel
6 glatte bzw. ebene Verbundschicht
7 längsgewellte Verbundschicht
9 Falzung
10 Berührungslinien
11 Mittelschicht
12 außen liegende Schicht der Verbundschicht 7
12' Zur längsgewellten Verbundschicht 7 weisende Schicht der Verbundschicht 6
13 innen liegende Schicht der Verbundschicht 7
13' nach außen weisende Schicht der Verbundschicht 6

**Patentansprüche**

1. Wickelbare mittels Verbundschichten, die aus mehreren fest aneinander haftenden einzelnen Schichten bestehen, von denen mindestens eine Schicht wasserdampfundurchlässig ist, hergestellte Kabelmuffeneinlage für schrumpfbare Kabelmuffen, die einen glatten Mittelbereich (2) und an die Durchmesser der gespleißten Kabel anpaßbare Endbereiche (3) aufweist, dadurch gekennzeichnet, daß die Kabelmuffeneinlage aus einer über ihre gesamte Länge längsgewellten Verbundschicht (7) und einen auf die Außenseite dieser Schicht aufgebrachten, nur den zwischen den beiden an die Durchmesser der gespleißten Kabel anpaßbaren Endbereiche (3) der Kabelmuffeneinlage liegenden Mittelbereich (2) der längsgewellten Verbundschicht (7) abdeckenden, ebenen Verbundschicht (6) zusammengesetzt ist, daß die längsgewellte Verbundschicht (7) aus drei fest aneinander haftenden Schichten (11, 12, 13) gebildet ist, wobei die Mittelschicht (11) aus wasserdampfundurchlässigem Material, die innen liegende Schicht (13) aus wärmefestem, elektrisch isolierendem Material und die außen liegende Schicht (12) aus einem verschmelz- bzw. verschweißbarem Material besteht, daß die ebene Verbundschicht (6) aus mindestens zwei Schichten (12', 13') besteht, wobei die zur längsgewellten Verbundschicht (7) weisende Schicht (12') aus einem mit der außen liegenden Schicht (12) der längsgewellten Verbundschicht (7) verschmelz- bzw. verschweißbarem Material und die nach außen weisende Schicht (13') aus wärmenfestem Material besteht und daß die längsgewellte Verbundschicht (7) und die ebene Verbundschicht (6) entlang ihrer durch die Wellung bedingten gemeinsamen Berührungslinien (10) durch Verschmelzung bzw. Verschweißung des Materials ihrer sich berührenden Grenzschichten (12, 12') fest miteinander verbunden sind.

2. Kabelmuffeneinlage nach Anspruch 1, dadurch gekennzeichnet, daß die längsgewellte Verbundschicht (7) jeweils an den Übergangsstellen zwischen den an die Durchmesser der gespleißten Kabel anpaßbaren Endbereichen (3) und der ebenen Verbundschicht (6) eine Falzung (9) oder eine Knicklinie aufweist.

3. Kabelmuffeneinlage nach einem der vorhergehenden Ansprüche, dadurch gekennzeichnet, daß die miteinander verschmelz- bzw. verschweißbaren Schichten (12, 12') aus Polyethylen bestehen.

4. Kabelmuffeneinlage nach einem der vorhergehenden Ansprüche, dadurch gekennzeichnet, daß die wärmefesten elektrische isolierenden Schichten (13, 13') aus Polyterephthalat bestehen.

5. Kabelmuffeneinlage nach einem der Ansprüche 1 bis 4, dadurch gekennzeichnet, daß auch auf der Innenseite der längsgewellten Verbundschicht (7) eine glatte Verbundschicht (6) aufgebracht ist (Fig. 3).

6. Kabelmuffeneinlage nach einem der vorhergehenden Ansprüche,

dadurch gekennzeichnet,

daß auf die Außenseite der Einlage eine weitere längsgewellte Verbundschicht (7) aufgebracht ist (Fig. 5).

7. Kabelmuffeneinlage nach einem der vorhergehenden Ansprüche,

dadurch gekennzeichnet,

daß die an die Durchmesser der gespleißten Kabel anpaßbaren, längsgewellten Endbereiche (3) der Einlage als separate Ansätze durch Schweißung oder Klebung mit dem Mittelbereich (2) verbunden sind.

## Claims

1. A windable cable sleeve insert for shrinkable cable sleeves, which is produced using compound layers consisting of a plurality of individual layers which adhere tightly to one another and at least one of which layers is impermeable to water vapour and which has a smooth central region (2) and end regions (3) which can be adapted to the diameters of the spliced cables, characterised in that the cable sleeve insert consists of a compound layer (7) which is corrugated longitudinally over its entire length, and a flat compound layer (6) which is applied on to the outer side of the longitudinally corrugated compound layer (7) and only covers the central region (2) which is arranged between the two end regions (3) of the cable sleeve insert which can be adapted to the diameters of the spliced cables; that the longitudinally corrugated compound layer (7) is formed from three layers (11, 12, 13) which adhere tightly to one another, where the central layer (11) consists of a material which is impermeable to water vapour, the inner layer (13) consists or a heat-resistant, electrically insulating material and the outer layer (12) consists a material which can be fused or welded; that the flat compound layer (6) consists or at least two layers (12', 13'), where the layer (12') directed towards the longitudinally corrugated compound layer (7) consists of a material which can be fused or welded to the outer layer (12) of the longitudinally corrugated compound layer (7), and the outwardly directed layer (13') consists of a heat-resistant material; and that the longitudinally corrugated compound layer (7) and the flat compound layer (6) are tightly connected to one another by fusing or welding of the material of their adjoining boundary layers (12, 12') along their common lines of contact (10) contingent on the corrugation.

2. A cable sleeve insert as claimed in claim 1, characterised in that at the junctions between the end regions (3) which can be adapted to the diameters of the spliced cables and the flat compound layer (6), the longitudinally corrugated compound layer (7) has in each case a fold (9) or a break line.

3. A cable sleeve insert as claimed in one of the preceding claims, characterised in that the layers (12, 12') which can be fused or welded together, consist of polyethylene.

4. A cable sleeve insert as claimed in one of the preceding claims, characterised in that the heat-resistant, electrically insulating layers (13,13') consist of polyterepthalate.

5. A cable sleeve insert as claimed in one or claims 1 to 4, characterised in that a smooth compound layer (6) is applied onto the inside of the longitudinally corrugated compound layer (7), (Figure 3).

6. A cable sleeve insert as claimed in one of the preceding claims, characterised in that a further longitudinally corrugated compound layer (7) is applied to the outside of the insert (Fig. 5).

7. A cable sleeve insert as claimed in one of the preceding claims characterised in that the longitudinally corrugated end regions (3) of the insert, which can be adapted to the diameters of the spliced cables, are connected to the central region by welding or adhesion as separate attachments.

## Revendications

1. Insert enroulable, réalisé au moyen de couches composites formées de plusieurs couches individuelles adhérant fermement les unes aux autres et dont l'une au moins est étanche à la vapeur d'eau, pour des manchons à câbles rétractables, cet insert comportant une zone centrale lisse (2) et des zones d'extrémité (3) adaptables au diamètre des câbles épissés, caractérisé par le fait que l'insert pour manchon à câbles est formé par la réunion d'une couche composite (7) ondulée longitudinalement sur toute sa longueur, et d'une couche composite plane (6) déposée sur la face extérieure de l'autre couche et recouvrant uniquement la zone médiane (2) de la couche composite (7) ondulée longitudinalement, qui est située entre les deux zones d'extrémité (3) de l'insert pour manchon à câbles, pouvant être adaptées au diamètre des câbles épissés, que la couche composite (7) ondulée longitudinalement est formée par trois couches (11, 12, 13) adhérant fermement les unes aux autres, la couche médiane (11) étant constituée en un matériau imperméable à la vapeur d'eau, tandis que la couche interne (13) est constituée en un matériau résistant à la chaleur et électriquement isolant et que la couche extérieure (12) est constituée en un matériau pouvant être réuni par fusion ou par soudage, que la couche composite plane (6) est constituée par au moins deux couches (12', 13'), la couche (12'), qui est située du côté de la couche composite (7) ondulée longitudinalement, étant constituée en un matériau pouvant être fixé par fusion ou soudé à la couche extérieure (12) de la couche composite (7) ondulée longitudinalement, tandis que la couche (13') située vers l'extérieur est constituée en un matériau résistant à la chaleur, et que la couche composite (7) ondulée longitudinalement et la couche composite plane (6) sont reliées rigidement l'une à l'autre, le long de leurs lignes communes de contact (10) conditionnées par les ondulations, par réunion par fusion ou par soudage du matériau de leurs couches limites (12, 12') qui sont en contact réciproque.

2. Insert pour manchon à câbles, suivant la revendication 1, caractérisé par le fait que la couche composite (7) ondulée longitudinalement comporte, respectivement au niveau des points de jonction entre les zones d'extrémité (3), qui peuvent être adaptées aux diamètres des câbles épissés, et la couche composite plane (6), un pliage (9) ou une ligne de coudage.

3. Insert pour manchon à câbles suivant l'une des revendications précédentes, caractérisé par le fait que les couches (12, 12'), qui peuvent être réunies entre elles par fusion ou par soudage, sont constituées par du polyéthylène.

4. Insert pour manchon à câbles suivant l'une des revendications précédentes, caractérisé par le fait que les couches électriquement isolantes (13, 13'), résistantes à la chaleur, sont constituées par du téréphthalate de polyéthylène.

5. Insert pour manchon à câbles suivant l'une des revendications 1 à 4, caractérisé par le fait qu'une couche composite lisse (6) est également déposée sur la face intérieure de la couche composite (7) ondulée longitudinalement (figure 3).

6. Insert pour manchon à câbles suivant l'une des revendications précédentes, caractérisé par le fait qu'une autre couche composite (7) ondulée longitudinalement est déposée sur la face extérieure de l'insert (figure 5).

7. Insert pour manchon à câbles suivant l'une des revendications précédentes, caractérisé par le fait que les zones d'extrémité (3) de l'insert, qui sont ondulées longitudinalement et sont adaptables aux diamètres des câbles épissés, sont réunies par soudage ou collage à la zone médiane (2), sous la forme d'éléments saillants séparés.